# EUROPEAN PATENT APPLICATION

(11) **EP 3 351 809 A1**
(43) Date of publication of application: **25.07.2018**
(21) Application number: 18152393.7
(22) Date of filing: 18.01.2018
(51) Int. Cl.: F16B 5/00

(54) **CONNECTING ASSEMBLY**

(30) Priority: 24.01.2017 CN 201720096887 U
(71) Applicant: Foshan Ichikoh Valeo Auto Lighting Systems Co. Ltd., 528000 Foschan Guangdong (CN)
(72) Inventor: ZHENG, Zhilei, Foschan, Guangdong 528000 (CN); ZHANG, Yun, Foschan, Guangdong 528000 (CN); GUO, Guanjin, Foschan, Guangdong 528000 (CN)
(74) Representative: Khairallah, Murielle

(57) **Abstract**

The present utility model provides a connecting assembly. The connecting assembly includes at least a first connecting member (1) and a second connecting member (2), the first connecting member (1) being coupled with the second connecting member (2) in a form-fitting manner. The first connecting member (1) includes at least two engaging portions, and the second connecting member (2) includes at least two engaging portions engaged with the engaging portions of the first connecting member (1) respectively. By means of the connecting assembly according to the present utility model, it can achieve a quick and firm connection of the connecting members, have a reduced cost and a better demolding performance during a molding process.

## Description

### BACKGROUND

### Technical Field

The present utility model relates to a field of connection and fixture for components, and more particularly, to a connecting assembly for connecting or fixing two or more components.

### Description of the Related Art

In the manufacture of machines, equipments and products, connection structures are widely used. Components or parts are connected or fixed to each other by a connection structure to form a finished product, in this way, it facilitates the design, processing and maintenance of the product. For example, in order for later maintenance of product, it is preferable to design the component or part to be disassemblable, thereby requiring a connection structure.

There are many commonly used connection structures, including threaded connections, clamping connections and adhesive connections, etc. In connection with the choice of connection means, connection stability, operation convenience and cost are main factors to be considered. The connecting means based on snap-fit connection has characteristics such as easy operation and quick connection, but there is often a problem that the connecting components are easily loosened in actual applications. In order to pursue the connection stability, it is generally considered to increase the number of connection points or incorporate more connection means. However, it causes a problem of complicating the structure of a connecting assembly, thereby leading to an increase in the cost of the connection assembly. In the case that the connection assembly is manufactured by molding, it will result in more complicated mold design and even demolding difficulty.

### SUMMARY

In order to alleviate the above problems, the present utility model provides a quick connecting assembly which can provide a firmly fixed connection.

The present utility model is further intended to provide a connecting assembly which is more cost effective.

The present utility model is still intended to provide a connecting assembly which is easy to be molded and has good demolding performance during a molding process.

The present utility model is yet intended to provide a connecting assembly which is different from the prior art in the aspect of connection manner but has a certain improvement on connection stability, operation convenience and cost effectiveness.

In order to achieve at least one of the above objectives, technical solutions of the present utility model are provided as follows:
A connecting assembly, comprising at least a first connecting member and a second connecting member, the first connecting member being coupled with the second connecting member in a form-fitting manner, wherein
the first connecting member comprises at least two engaging portions, and the second connecting member comprises at least two engaging portions engaged with the engaging portions of the first connecting member respectively.

According to a preferred embodiment of the present utility model, the first connecting member comprises a first recess and a first protrusion, and the second connecting member comprises a main body and an extension portion extending from the main body, the second connecting member further comprises a second protrusion and a second recess, the second protrusion or the second recess being provided on the extension portion, and
wherein the first recess is configured to be engaged with the second protrusion, and the first protrusion is configured to be engaged with the second recess.

According to a preferred embodiment of the present utility model, the second protrusion is provided on the extension portion,
the extension portion is laterally offset relative to the main body, so that a main structure of the extension portion is located in a different plane from a plane in which a main structure of the main body is located, and the second recess is arranged at a connection portion of the extension portion and the main body, and
the second connecting member further comprises a cover portion extending from the extension portion in an opposite direction to an extending direction of the extension portion, and a concave space of the second recess is formed between the cover portion and the main body.

According to a preferred embodiment of the present utility model, at least one partition portion is provided between the cover portion and the main body, so as to form a plurality of the second recesses, and the first connecting member comprises a plurality of the first protrusions, the number of which is equal to that of the second recesses.

According to a preferred embodiment of the present utility model, the first connecting member comprises a first body, from which the first protrusion extends, and an extending direction of the first protrusion is angled by a first angle relative to a surface of the first body.

According to a preferred embodiment of the present utility model, the partition portion has a sheet-like shape, and the partition portion is parallel with the extending direction of the first protrusion when the first connecting member is coupled with the second connecting member.

According to a preferred embodiment of the present utility model, the first angle is less than 45°.

According to a preferred embodiment of the present utility model, the extending direction of the first protrusion is angled by a second angle relative to a longitudinal direction of the first body.

According to a preferred embodiment of the present utility model, the second angle is less than 90°.

According to a preferred embodiment of the present utility model, the first connecting member further comprises a reinforcement portion, and/or the second connecting member further comprises a reinforcing rib.

According to another aspect of the present utility model, there is provided a luminous device for a vehicle, comprising the connecting assembly according to any one of the above embodiments.

According to a further aspect of the present utility model, there is provided a vehicle, comprising the connecting assembly according to any one of the above embodiments.

In the connecting assembly according to the present utility model, each connecting member includes at least two engaging portions. For example, the first connecting member includes a first recess and a first protrusion, the second connecting member includes a second protrusion and a second recess, the first recess is configured to be engaged with the second protrusion and the first protrusion is configured to be engaged with the second recess to thereby form at least two sets of matching structures, in this way, it can prevent the connection between the connecting members from being loosened. Therefore, the connecting assembly according to the present utility model can provide a more stable connection. Furthermore, the connection is completed by a form-fitting snap-fit structure, therefore a quick connection can be realized.

By means of reasonably arranging the engaging portions on each connecting member, it allows the resulting matching structures to be more mechanically stable and more compact, and achieves a low cost design. The connecting assembly according to the present utility model is suitable for the connection and fixing between plastic components. If the plastic component is manufactured by a molding method, the connecting assembly according to the embodiments of the present utility model is easier to be molded. Furthermore, since the matching structures are distributed on two connecting members respectively, the connecting assembly according to the embodiments of the present utility model has a better demolding performance during a molding process, compared with the arrangement of such a connection structure on one component.

In summary, the present utility model provides a connecting assembly which is different from the prior art in the aspect of connection manner but has a certain improvement on connection stability, operation convenience and cost effectiveness. The connecting assembly can be applied to a lighting and/or signaling device of a motor vehicle. For example, it can be used to connect and fix an outer panel to a built-in plate of a headlight or connect and fix a built-in plate to another built-in plate.

### BRIEF DESCRIPTION OF THE DRAWINGS

Fig. 1 is a front view of a connecting assembly according to an embodiment of the present utility model in a coupled state;
Fig. 2 is a side view of a connecting assembly according to an embodiment of the present utility model in a coupled state;
Fig. 3 is a top view of a connecting assembly according to an embodiment of the present utility model in a coupled state;
Fig. 4 is a front view of a first connecting member of a connecting assembly according to an embodiment of the present utility model in a coupled state;
Fig. 5 is a side view of a first connecting member of a connecting assembly according to an embodiment of the present utility model in a coupled state;
Fig. 6 is a top view of a first connecting member of a connecting assembly according to an embodiment of the present utility model in a coupled state;
Fig. 7 is a front view of a second connecting member of a connecting assembly according to an embodiment of the present utility model in a coupled state;
Fig. 8 is a side view of a second connecting member of a connecting assembly according to an embodiment of the present utility model in a coupled state;
Fig. 9 is a bottom view of a second connecting member of a connecting assembly according to an embodiment of the present utility model in a coupled state; and
Fig. 10 is a rear view of a second connecting member of a connecting assembly according to an embodiment of the present utility model in a coupled state.

### DETAILED DESCRIPTION OF PREFERRED EMBODIMENTS

Exemplary embodiments of the present utility model will be described in detail below with reference to the accompanying drawings in which the same or similar reference numerals represent the same or similar elements. In addition, in the following detailed description, numerous specific details are set forth in order to facilitate the explanation and provide a thorough understanding of the embodiments of the present disclosure. However, it will be apparent that the embodiment(s) may also be practiced without these specific details. In other cases, well-known structures and devices are schematically illustrated to simplify the drawings.

According to a general inventive concept of the present utility model, there is provided a connecting assembly, including at least a first connecting member and a second connecting member, the first connecting member being coupled with the second connecting member in a form-fitting manner, wherein the first connecting member includes at least two engaging portions, and the second connecting member includes at least two engaging portions engaged with the engaging portions of the first connecting member respectively.

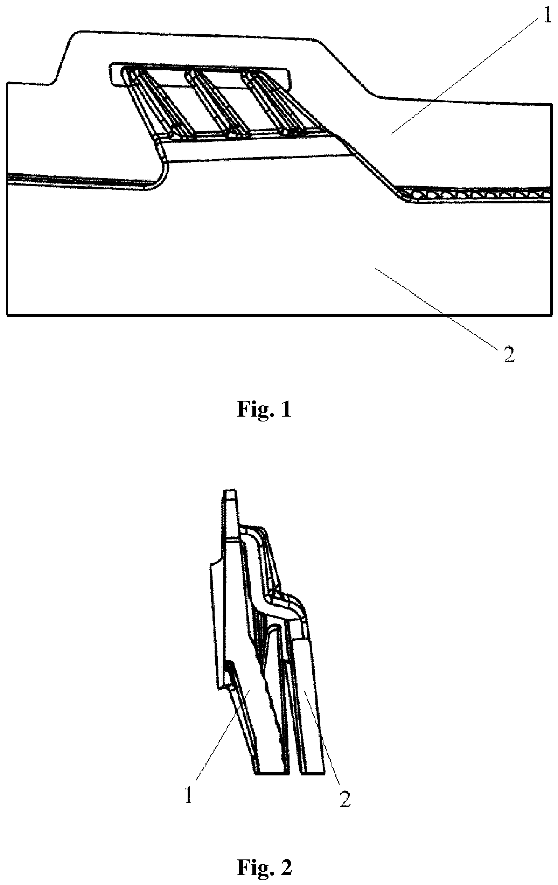

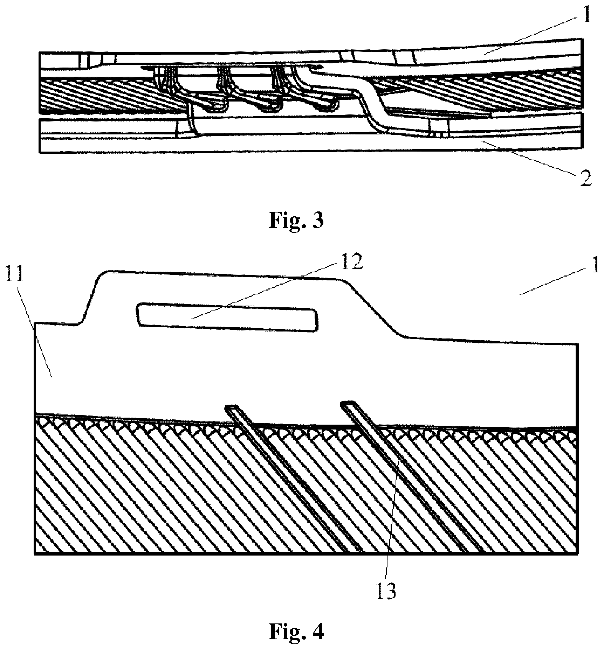

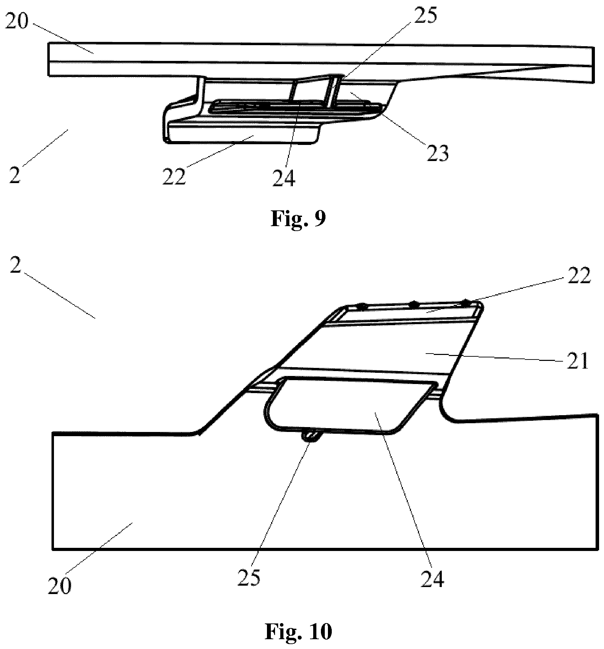

Figs. 1-3 respectively show a front view, a side view and a top view of a connecting assembly according to an embodiment of the present utility model in a coupled state. As shown in Figs. 1-3, the connecting assembly includes two connecting members, that is, a first connecting member 1 and a second connecting member 2. The first connecting member 1 is coupled with the second connecting member 2 in a form-fitting manner, in particular, the first connecting member 1 includes two engaging portions, and the second connecting member 2 includes two engaging portions engaged with the engaging portions of the first connecting member 1 respectively, which will be described in detail below with reference to Figs. 4-10.

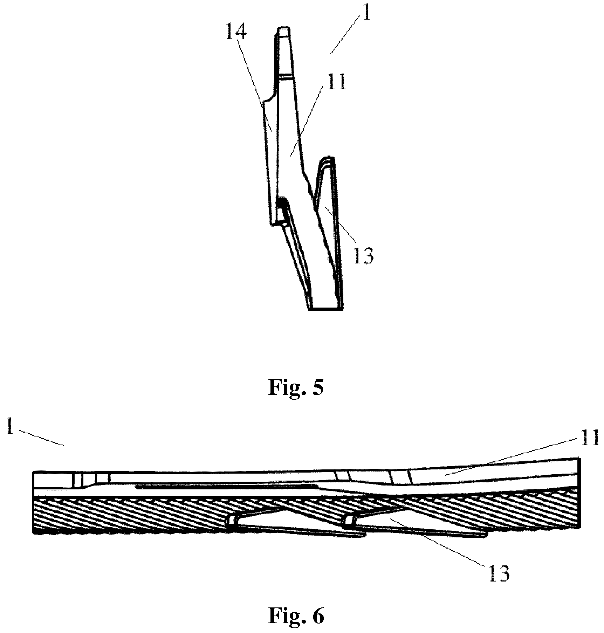

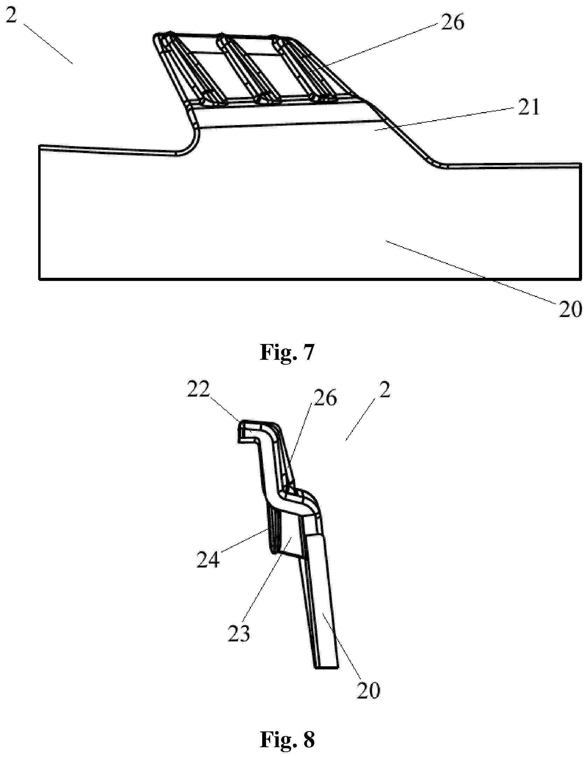

Figs. 4-6 show the first connecting member 1 of the connecting assembly according to the embodiment of the present utility model separately, and Figs. 7-10 show the second connecting 2 of the connecting assembly according to the embodiment of the present utility model separately. As shown, the first connecting member 1 includes a first recess 12 and a first protrusion 13, and the second connecting member 2 includes a main body (a second body 20) and an extension portion 21 extending from the main body. The second connecting member 2 further includes a second protrusion 22 and a second recess 23, and the second protrusion 22 is provided on the extension portion 21. The first recess 12 is configured to be engaged with the second protrusion 22, and the first protrusion 13 is configured to be engaged with the second recess 23. In the embodiment shown in Fig. 4, the first connecting member 1 is substantially sheet-shaped with a cuboid structure, and the first connecting member 1 is mainly formed from a first body 11. Preferably, the first recess 12 is formed on a portion extending outwardly from the first body 11; the first recess 12 may be constructed as a groove or a through hole; the first protrusion 13 extends from the first body 11, and an extending direction of the first protrusion 13 is angled by a first angle relative to a surface of the first body 11 (see Figs. 2 and 5). The first angle is configured as an acute angle, for example, the first angle is less than 45°, preferably less than 15°. In this way, the first protrusion 13 forms a protrusion that extends slightly outwardly and obliquely from the first body without being excessively oblique, therefore it can be easily fitted with the second recess 23 to be described below. Furthermore, by means of such a first protrusion 13, a small volume may be maintained when the first protrusion 13 is combined with the second recess 23. In order to facilitate the insertion of the first protrusion 13 into the second recess 23, the first protrusion 13 may be constructed as an elongated rod-like portion and be generally tapered or wedge-shaped, i.e., a distal end of the first protrusion 13 has a narrower cross section than a proximal end thereof. Preferably the distal end of the first protrusion 13 has a smooth transition surface.

Further, the extending direction of the first protrusion 13 is angled by a second angle relative to a longitudinal direction of the first body 11. According to a preferred embodiment of the present utility model, the second angle is less than 90°. By means of allowing the extending direction of the first protrusion 13 not to be parallel with and vertical to the longitudinal direction of the first body 11 but forming an acute angle therebetween, the first protrusion 13 may be laterally inserted into the second recess 23 of the second connecting member 2, thereby facilitating the connection and fixing of first connecting member 1 and the second connecting member 2. In addition, the second protrusion 22 is a protrusion extending from the extension portion 21 and substantially perpendicular to the extension portion 21. The protrusion portion 22 may have a rectangular cross section and be engaged with the groove or the through hole of the first recess 12.

Although the first connecting member 1 according to the present utility model is described with reference to the drawings as that including the first recess 12 and the first protrusion 13 and the second connecting member 2 according to the present utility model is described with reference to the drawings as that including the second protrusion 22 and the second recess 23, the present utility model is not limited to the above examples. The connecting assembly according to the present utility model may further include a first connecting member having two or more recesses and a second connecting member having two or more protrusions, or alternatively, it is possible that the first connecting member has two or more protrusions and the second connecting member has two or more recesses. As a specific alternative, the second recess 23 may be disposed on the extension portion 21.

The first connecting member 1 and the second connecting member 2 may be made from a plastic material (for example, PC or PBT material) with a mold by a molding process. The recess and the protrusion are integrally formed on the connecting member. In the case that the connecting assembly according to the present utility model is used in a lighting and/or signaling device of a motor vehicle, the connecting assembly may be made of a transparent material as required. For example, in the lighting and/or signaling device of the motor vehicle, it generally includes an outer lens panel, an inner lens, a housing, a built-in plate (or frame), a light guide and the like, the connection between the built-in plate and the lens or the lens panel can be realized by the connecting assembly according to the present utility model, and the connection between a flat light guide and the built-in plate can also be realized by the same connecting assembly. In this case, the components in the lighting and/or signaling device of the motor vehicle may not be fixed by screws, thereby preventing light leakage. In order to facilitate the connection between the first connecting member and the second connecting member, they may be advantageously made of a material that is slightly elastically deformable.

As shown in Fig. 8, the extension portion 21 is laterally offset relative to the second body 20, so that a main structure of the extension portion 21 is located in a different plane from a plane in which a main structure of the second body 20 is located, and the second recess 23 is arranged at a connection portion of the extension portion 21 and the second body 20. The second connecting member 2 further includes a cover portion 24 extending from the extension portion 21 in an opposite direction to an extending direction of the extension portion 21, and a concave space of the second recess 23 is formed between the cover portion 24 and the second body 20.

By means of the above-described means, the second recess 23 can be formed by a space between the second body 20 and the cover portion 24. In this case, the second recess 23 is relatively easy to be obtained by molding, and by means of the above-described means, it is easy to realize a connection of the first connecting member and the second connecting member which is compact in structure.

According to a preferred embodiment of the present utility model, at least one partition portion 25 is provided between the cover portion 24 and the second body 20, so as to form a plurality of the second recesses 23, and the first connecting member 1 includes a plurality of the first protrusions 13. The number of the first protrusions 13 is equal to that of the second recesses 23. In the embodiment shown in Figs. 4-10, there is one partition portion 25, and accordingly, two second recesses 23 and two first protrusions 13 are formed.

Advantageously, the partition portion 25 has a sheet-like shape, and the partition portion 25 is parallel with the extending direction of the first protrusion 13 when the first connecting member 1 is coupled with the second connecting member 2. In the case that the extending direction of the first protrusion 13 is angled by a second angle relative to the longitudinal direction of the first body 11, the partition portion 25 is also inclined relative to the second body 20 of the second connecting member 2. Thus, it can avoid a straightly vertical or horizontal insertion of the first connecting member 1 and the second connecting member 2, thereby reducing the requirement on a space for the connecting assembly.

According to a specific embodiment of the present utility model, the first connecting member 1 further includes a reinforcement portion 14, and the second connecting member 2 further includes a reinforcing rib 26. The reinforcement portion 14 may be a portion that protrudes from the first body 11 of the first connecting member 1, the reinforcement portion 14 increases the thickness of the first body 11, and the reinforcement portion 14 is smoothly transitioned to the first body 11. The connecting member 2 may have a plurality of the reinforcing ribs 26. In the embodiment shown in Fig. 7, three reinforcing ribs 26 are provided on the extension portion 21 for enhancing the strength of the extension portion 21. Since the extension portion 21 is gradually tapered upwardly, the reinforcing ribs 26 may have a shape that is gradually tapered upwardly.

In the connecting assembly according to the present utility model, each connecting member includes at least two engaging portions. For example, the first connecting member includes a first recess and a first protrusion, the second connecting member includes a second protrusion and a second recess, the first recess is configured to be engaged with the second protrusion and the first protrusion is configured to be engaged with the second recess to thereby form at least two sets of matching structures, in this way, it can prevent the connection between the connecting members from being loosened. Therefore, the connecting assembly according to the present utility model can provide a more stable connection. Furthermore, the connection is completed by a form-fitting snap-fit structure, therefore a quick connection can be realized.

By means of reasonably arranging the engaging portions on each connecting member, it allows the resulting matching structures to be more mechanically stable and more compact, and achieves a low cost design. The connecting assembly according to the present utility model is suitable for the connection and fixing between plastic components. If the plastic component is manufactured by a molding method, the connecting assembly according to the embodiments of the present utility model is easier to be molded. Furthermore, since the matching structures are distributed on two connecting members respectively, the connecting assembly according to the embodiments of the present utility model has a better demolding performance during a molding process, compared with the arrangement of such a connection structure on one component.

In summary, the present utility model provides a connecting assembly which is different from the prior art in the aspect of connection manner but has a certain improvement on connection stability, operation convenience and cost effectiveness. The connecting assembly can be applied to a lighting and/or signaling device of a motor vehicle. For example, it can be used to connect and fix an outer panel to a built-in plate of a headlight or connect and fix a built-in plate to another built-in plate.

Further, a plurality of grooves are further provided in the first body 11 of the first connecting member 1, the grooves are provided in a surface of the first body 11 facing the second connecting member 2, and the plurality of grooves are substantially parallel with the extending direction of the first protrusion 13. Preferably, the grooves have a wedge-shaped cross section. The plurality of grooves serve to increase the surface friction of the first body 11 of the first connecting member 1, so as to increase the engagement force between the second connecting member 2 and the first connecting member 1 when they are engaged with each other, thereby preventing the detachment of the first connecting member 1 from the second connecting member 2.

According to another aspect of the present utility model, there is provided a luminous device for a vehicle including the connecting assembly according to any one of the above embodiments.

According to a further aspect of the present utility model, there is provided a vehicle including the connecting assembly according to any one of the above embodiments.

While the embodiments of the present utility model have been shown and described, variations and modifications may be made to these embodiments by those skilled in the art without departing from the principles and spirit of the present utility model. The scope of the present utility model is defined by the appended claims and equivalents thereof

### Reference numeral list

- 1: first connecting member
- 2: second connecting member
- 11: first body
- 12: first recess
- 13: first protrusion
- 14: reinforcement portion
- 20: second body
- 21: extension portion
- 22: second protrusion
- 23: second recess
- 24: cover portion
- 25: partition portion
- 26: reinforcing rib

## Claims

1. A connecting assembly, comprising at least a first connecting member (1) and a second connecting member (2), the first connecting member (1) being coupled with the second connecting member (2) in a form-fitting manner, wherein
the first connecting member (1) comprises at least two engaging portions, and the second connecting member (2) comprises at least two engaging portions engaged with the engaging portions of the first connecting member (1) respectively.

2. The connecting assembly according to claim 1, wherein the first connecting member (1) comprises a first recess (12) and a first protrusion (13), and the second connecting member (2) comprises a main body and an extension portion (21) extending from the main body, the second connecting member (2) further comprises a second protrusion (22) and a second recess (23), the second protrusion (22) or the second recess (23) being provided on the extension portion (21), and
wherein the first recess (12) is configured to be engaged with the second protrusion (22), and the first protrusion (13) is configured to be engaged with the second recess (23).

3. The connecting assembly according to claim 2, wherein the second protrusion (22) is provided on the extension portion (21),
the extension portion (21) is laterally offset relative to the main body, so that a main structure of the extension portion (21) is located in a different plane from a plane in which a main structure of the main body is located, and the second recess (23) is arranged at a connection portion of the extension portion (21) and the main body, and
the second connecting member (2) further comprises a cover portion (24) extending from the extension portion (21) in an opposite direction to an extending direction of the extension portion (21), and a concave space of the second recess (23) is formed between the cover portion (24) and the main body.

4. The connecting assembly according to claim 3, wherein at least one partition portion (25) is provided between the cover portion (24) and the main body, so as to form a plurality of the second recesses (23), and the first connecting member (1) comprises a plurality of the first protrusions (13), the number of which is equal to that of the second recesses (23).

5. The connecting assembly according to claim 4, wherein the first connecting member (1) comprises a first body (11), from which the first protrusion (13) extends, and an extending direction of the first protrusion (13) is angled by a first angle relative to a surface of the first body (11).

6. The connecting assembly according to claim 5, wherein the partition portion (25) has a sheet-like shape, and the partition portion (25) is parallel with the extending direction of the first protrusion (13) when the first connecting member (1) is coupled with the second connecting member (2).

7. The connecting assembly according to claim 6, wherein the first angle is less than 45°.

8. The connecting assembly according to claim 7, wherein the extending direction of the first protrusion (13) is angled by a second angle relative to a longitudinal direction of the first body (11).

9. The connecting assembly according to claim 8, wherein the second angle is less than 90°.

10. The connecting assembly according to any one of claims 1-9, wherein the first connecting member (1) further comprises a reinforcement portion (14), and/or the second connecting member (2) further comprises a reinforcing rib (26).

11. A luminous device for a vehicle, comprising the connecting assembly according to any one of claims 1-10.

12. A vehicle, comprising the connecting assembly according to any one of claims 1-10.
